# EUROPÄISCHE PATENTSCHRIFT

(11) **EP 0 426 709 B1**
(45) Veröffentlichungstag und Bekanntmachung des Hinweises auf die Patenterteilung: **17.03.1993**
(21) Anmeldenummer: 89908160.8
(22) Anmeldetag: 08.07.1989
(51) Int. Cl.: E04G 21/04, E21D 11/10

(54) **VORRICHTUNG UND VERFAHREN ZUM VERTEILEN VON PUMPFÄHIGEN DICKSTOFFEN IN MEHRERE FÖRDERLEITUNGEN**
A PROCESS AND DEVICE FOR DISTRIBUTING PUMPABLE VISCOUS MATERIALS AMONG SEVERAL LINES
PROCEDE ET DISPOSITIF DE DISTRIBUTION DE LIQUIDES EPAIS POMPABLES DANS UNE PLURALITE DE CONDUITES DE REFOULEMENT

(30) Priorität: 23.07.1988 DE 3825080
(43) Veröffentlichungstag der Anmeldung: 15.05.1991
(73) Patentinhaber: PUTZMEISTER-WERK MASCHINENFABRIK GMBH, 72631 Aichtal (DE)
(72) Erfinder: KEMPF, Manfred, D-7447 Aich (DE); SCHLECHT, Karl, D-7000 Stuttgart 70 (DE)
(74) Vertreter: Wolf, Eckhard, Dr.-Ing.
(86) Internationale Anmeldenummer: EP8900788
(87) Internationale Veröffentlichungsnummer: WO9001094

(56) Entgegenhaltungen:
- DE-A- 3 330 892
- DE-C- 3 229 103
- DE-C- 3 506 463
- FR-A- 2 360 726

## Beschreibung

Die Erfindung betrifft eine Vorrichtung zum Verteilen von mittels einer Pumpe durch eine Zuleitung gedrückten Dickstoffen, z.B. Beton, in mehrere Förderleitungen der im Oberbegriff des Patentanspruchs 1 angegebenen Gattung sowie ein Verfahren zum Betrieb einer solchen Vorrichtung.

Es ist eine Vorrichtung dieser Art für den Einsatz auf Tunnelbaustellen bekannt (DE-PS 35 06 463), bei der die Förderleitungen mit ihrem freien Ende an die sowohl in Umfangsrichtung als auch in Richtung der Tunnelachse gegeneinander versetzt angeordneten Füllöffnungen einer Tunnelöffnung anschließbar und nacheinander mit Beton beaufschlagbar sind. Zu diesem Zweck sind die der Pumpe zugewandten Anschlüsse der Förderleitungen rotationssymmetrisch an einer Verteilerplatte angeflanscht. Weiter ist ein schwenkbares, vorzugsweise S-förmiges Verteilerrohr vorgesehen, dessen der Betonpumpe zugewandter Anschluß über eine Drehkupplung koaxial zur Symmetrieachse mit einem zur Pumpe führenden Zuleitungsstutzen verbunden ist und dessen zweiter Anschluß mit einem an einer Drehplatte angeordneten, durch die Drehplatte hindurch zur Verteilerplatte führenden Verbindungsstutzen angeflanscht ist. Die Drehplatte ist um die Achse des Zuleitungsstutzens relativ zur feststehenden Verteilerplatte verdrehbar, so daß der Verbindungsstutzen mit den verschiedenen Förderleitungsanschlüssen wahlweise verbindbar ist. Die Überwachung der Zuordnung zwischen der Stellung des Verbindungsstutzens und dem gewünschten Förderleitungsanschluß erfolgt dort über einen Nockenendschalter, also über einen elektrischen Näherungsschalter. Es hat sich jedoch gezeigt, daß diese Maßnahme allein für eine exakte Zuordnung noch nicht ausreicht. Das Reibungsverhalten zwischen Drehplatte und Verteilerplatte ändert sich nämlich je nach Einsatzdauer und Verschleiß der Vorrichtung. Durch den unterschiedlichen Verschleiß setzt sich Material in die Verschleißzonen. Dadurch ändert sich das Reibverhalten an den verschiedenen Anschlüssen, so daß die Anschlüsse beim Weiterdrehen mehr oder weniger weit überfahren oder unterfahren werden. Wenn die Durchgangsöffnungen nicht exakt fluchtend ausgerichtet sind, tritt ein erhöhter Strömungswiderstand oder gar eine Verstopfung auf. Beim Einsatz von Stahlfaserbeton tritt zusätzlich das Problem auf, daß beim Weiterdrehen der Drehplatte immer eine gewisse Menge Stahlfasern mitgenommen wird, die sich im Drehspalt absetzen und sich dort zu mehr oder weniger dicken Schichten aufbauen. Dadurch entstehen Lücken, durch die der geförderte Beton ausbluten kann. Durch den dadurch bedingten Flüssigkeitsverlust können wiederum Verstopfungen auftreten, die die Funktionsfähigkeit der Maschine beeinträchtigen. Dies gilt um so mehr, als dort zwischen der Verteilerplatte und der Drehplatte sich ein freier Zwischenraum befindet, der sich allmählich mit austretendem Beton füllt und sich nach dessen Erhärten zusetzt, bis ein Weiterdrehen nicht mehr möglich ist.

Der Erfindung liegt die Aufgabe zugrunde, die bekannte Vorrichtung der genannten Art dahingehend zu verbessern, daß unabhängig von der Konsistenz der zu fördernden Dickstoffe und unabhängig von den sich im Laufe der Betriebsdauer ändernden Reibungsverhältnissen eine exakte Positionierung der Drehplatte gegenüber der Verteilerplatte in den vorgeschriebenen Durchlaßpositionen möglich ist.

Zur Lösung dieser Aufgabe werden die im Patentanspruch 1 angegebenen Merkmale vorgeschlagen. Weitere vorteilhafte Ausgestaltungen und Weiterbildungen des Erfindungsgedankens ergeben sich aus den abhängigen Ansprüchen.

Insbesondere wird gemäß der Erfindung vorgeschlagen, daß an der Drehplatte im Winkelabstand der Förderleitungsanschlüsse voneinander angeordnete Sperrnocken und an der Verteilerplatte eine Sperrklinke angeordnet sind, daß die Sperrnocken in Vorwärtsdrehrichtung der Drehplatte unter der Sperrklinke hindurchdrehbar sind und in Rückwärtsdrehrichtung gegen diese unter fluchtender Ausrichtung des Verbindungsstutzens mit dem jeweiligen Förderleitungsanschluß anschlagen. Zweckmäßig weisen die am Umfang der Drehplatte angeordneten Sperrnocken eine als Auflauffläche für die unter der Einwirkung einer Feder stehende Sperrklinke ausgebildete vordere Keilfläche und eine gegen eine Stirnfläche der Sperrklinke anschlagende scharfkantige Rückfläche auf. Damit ist es möglich, die Drehplatte mit ihren Nocken in der einen Richtung unter der Klinke durchzudrehen und anschließend in die durch die einzelnen Nocken bestimmten Anschlagpositionen gegen die Klinke zurückzudrehen. Beim Zurückdrehen kann mit voller Kraft gegen die Klinke gefahren werden, so daß etwaige Ablagerungen oder unterschiedliche Reibwerte bei der Positionierung keine Rolle mehr spielen. Weiter wird beim Vor- und Zurückdrehen der Drehplatte ein Reinigungseffekt erzielt, da etwaige Stahlfasern, die sich beispielsweise beim Vorwärtsdrehen zwischen den beiden Platten absetzen, beim Zurückdrehen wieder freigesetzt werden.

Da trotz dieser Maßnahmen beim Betrieb mit Stahlfaserbeton nicht verhindert werden kann, daß sich einzelne Stahlfasern zwischen Verteilerplatte und Drehplatte zumindest zeitweilig absetzen, wird erfindungsgemäß vorgeschlagen, daß die Drehplatte auf ihrer der Verteilerplatte zugewandten Breitseite eine mit einer Durchtrittsöffnung für den Verbindungsstutzen versehene gummielastische Dichtungsscheibe trägt, mit der sie unter Abdichtung der augenblicklich nicht mit dem Verbindungsstutzen fluchtenden Förderleitungsanschlüsse gegen die Verteilerplatte anliegt. Die sich zwischen den Platten ablagernden Stahlfasern werden zumindest zeitweilig in das gummielastische Material eingebettet, ohne daß es dabei zu einer Reduzierung der Abdichtung kommt. Beim Weiterdrehen werden die Stahlfasern zum Teil wieder von der Dichtungsplatte abgestreift, insbesondere wenn eine Kante, beispielsweise die Lochkanten der Förderleitungsanschlüsse, überfahren wird. Ein Teil der Stahlfasern wird sich jedoch in das elastische Material der Dichtungsscheibe dauerhaft einbohren oder einbetten, so daß die Dichtungsscheibe nach einer gewissen Standzeit als Verschleißteil ausgetauscht werden muß. Dagegen bleibt die an der Verteilerplatte angeordnete, der Dichtungsscheibe gegenüberliegende Gegenscheibe aus Hartmetall trotz der sich ablagernden Stahlfasern nahezu verschleißfrei.

Eine weitere Verbesserung in dieser Hinsicht kann dadurch erzielt werden, daß im Bereich der Anlagefläche zwischen der Drehplatte und der Verteilerplatte radial nach außen und nach innen gelangende Betonbestandteil und Stahlfasern kontinuierlich durch Spülwasserkreisläufe weggefördert werden. Zu diesem Zweck ist einmal im radialen Bereich zwischen dem Kugeldrehkranz und den Förderleitungsanschlüssen ein mit Spülwasser beaufschlagbarer umlaufender Ringkanal angeordnet. Zum anderen kann im zentralen Bereich der Drehplatte und der Verteilerplatte eine die Anlagefläche zwischen diesen Platten durchgreifende, mit Spülwasser beaufschlagbare Kammer ausgespart sein.

Zur Einstellung der vorgeschriebenen Drehlage der Drehplatte befindet sich an der Verteilerplatte ein auf im Winkelabstand der Förderleitungsanschlüsse voneinander an der Drehplatte angeordnete Vorsprünge oder Laschen berührungslos ansprechender, als Näherungsschalter ausgebildeter Sensor. Zur Erhöhung der Redundanz besteht jeder Sensor aus zwei gleichartigen, in ODER-Schaltung miteinander gekoppelten Sensorelementen.

Um darüberhinaus eine Nullung der Drehlage der Drehplatte vornehmen zu können, befindet sich im Winkelabstand vom Sensor ein nur auf einen der Vorsprünge oder eine der Laschen ansprechender Referenzsensor.

Das Weiterschalten von Förderleitung zu Förderleitung kann nach bestimmten Kriterien erfolgen. Bei der Tunnelbetonierung insbesondere mit Extrudierbeton spielt vor allem der in der Injektionskammer erreichte Absolutdruck eine Rolle. Deshalb wird der Drehvorgang der Drehplatte zweckmäßig nach Maßgabe des am Ausgang der augenblicklich durchgeschalteten Förderleitung gemessenen Dickstoffdrucks ausgelöst, wobei gleichzeitig auch der Pumpvorgang abgeschaltet wird.

Grundsätzlich ist es jedoch auch möglich, die Umsteuerung volumenabhängig durchzuführen. Das bedeutet, daß der Drehvorgang der Drehplatte nach Erreichen einer bestimmten, durch die augenblicklich durchgeschaltete Förderleitung transportierten Fördermenge oder nach Erreichen einer vorgegebenen Hubzahl ausgelöst wird. Wenn die als Betonverteiler ausgebildete Vorrichtung mit einer Tunnelvortriebsmaschine gekoppelt ist, kann die Umschaltfrequenz zwischen den einzelnen Drehvorgängen zusätzlich nach Maßgabe der Vortriebsgeschwindigkeit der Tunnelmaschine gesteuert werden.

Beim Tunnelbau wird die Vortriebsmaschine regelmäßig durch eine Fettkammer mit Stahleinlagen gegenüber eindringendem Wasser abgedichtet. Der Fettkammerdruck stellt einen Gegendruck gegen das eindringende Wasser dar. Beim Injizieren von Beton muß darauf geachtet werden, daß der Betondruck nicht höher als der Fettkammerdruck ist, da sonst das Fett verdrängt und die Dichtung zerstört wird. Deshalb ist es zweckmäßig, den Pumpvorgang jedenfalls dann abzuschalten und den Drehvorgang auszulösen, wenn ein vorgegebener Wert des Differenzdrucks zwischen dem Fettkammerdruck und dem Injektionsdruck an der Austrittsstelle der augenblicklich durchgeschalteten Förderleitung unterschritten wird.

Um das zu überwindende Drehmoment beim Drehvorgang so klein wie möglich zu halten, wird bei jedem Drehvorgang der Drehplatte der Pumpendruck abgeschaltet. Die verschiedenen Förderleitungsanschlüsse werden zweckmäßig mit Hilfe einer speicherprogrammierbaren Steuerung in beliebig vorgebbarer Reihenfolge angefahren.

Die erfindungsgemäße Vorrichtung läßt sich besonders vorteilhaft bei der Verwendung von Extrudierbeton mit Stahlfasern bei Tunnelbetonierungen einsetzen. Dort ist eine präzise Eindosierung von Beton in die Stirnschalung der Tunnelbohrmaschine von entscheidender Bedeutung, da nur so verhindert werden kann, daß es beim Unterfahren von Flüssen, Kies und Wasser aus der Umgebung zu Unregelmäßigkeiten bei der Betonierung kommt.

Im folgenden wird die Erfindung anhand des in der Zeichnung in schematischer Weise dargestellten Ausführungsbeispiels näher erläutert. Es zeigen
Fig. 1 eine Seitenansicht eines Rotor-Verteilers in vereinfachter geschnittener Darstellung;
Fig. 2 eine Draufsicht auf die Drehplatte des Rotor-Verteilers nach Fig. 1;
Fig. 3 eine ausschnittsweise Schnittdarstellung des Rotor-Verteilers in vergrößerter Detaildarstellung.

Der in der Zeichnung dargestellte Rotor-Verteiler besteht im wesentlichen aus einer starr mit einem Maschinengestell 10 verbundenen Verteilerplatte 12, einer um die Achse 14 drehbar an der Verteilerplatte 12 gelagerten Drehplatte 16, einem an der Drehplatte 16 angeflanschten S-förmigen Verteilerrohr 18 und mehreren in gleichen Winkelabständen voneinander angeordneten, an der Verteilerplatte 12 angeflanschten Förderleitungen 20. Das Verteilerrohr 18 ist mit seinem der nicht dargestellten Pumpe zugewandten Anschluß 21 über eine Drehkupplung 22 koaxial zur Achse 14 mit einem zur Pumpe führenden Zuleitungsstutzen 24 verbunden und kann mit seinem zweiten Anschluß 26 über einen an der Drehplatte 16 angeordneten, durch die Drehplatte 16 hindurch zur Verteilerplatte 12 führenden Verbindungsstutzen 28 wahlweise mit den verschiedenen Förderleitungsanschlüssen 30 an der Verteilerplatte 12 verbunden werden.

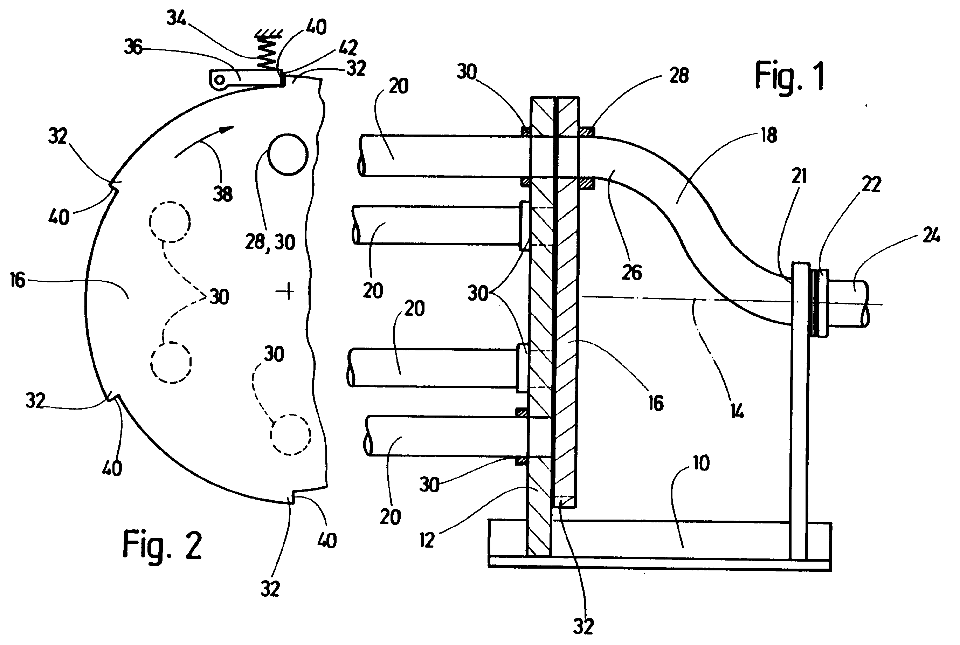

An der Drehplatte 16 sind im Winkelabstand der Förderleitungsanschlüsse 30 voneinander angeordnete Sperrnocken 32 angeordnet, während die Verteilerplatte eine unter der Einwirkung einer Feder 34 stehende Sperrklinke 36 aufweist. In der durch den Pfeil 38 in Fig. 2 angedeuteten Vorwärtsdrehrichtung der Drehplatte 16 sind die Sperrnocken 32 unter der Sperrklinke 36 hindurchdrehbar, während sie in der Rückwärtsdrehrichtung mit ihrer rückwärtigen Flanke 40 gegen die Stirnfläche 42 der Sperrklinke 36 anschlagen.

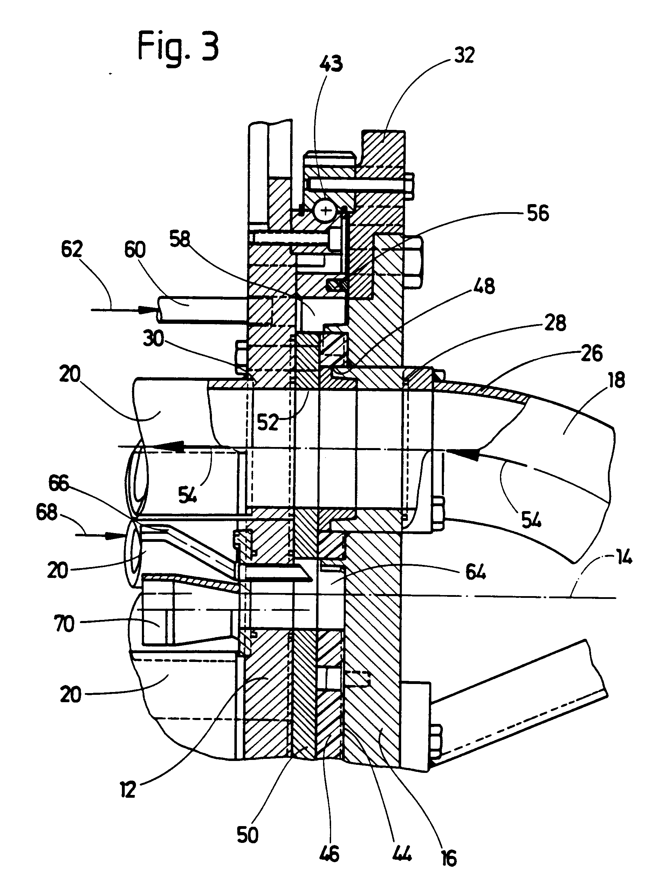

Wie aus der Detail-Darstellung der Fig. 3 zu ersehen ist, ist die Drehplatte 16 über einen Kugeldrehkranz 43 an der Verteilerplatte 12 gelagert. Die Drehplatte 16 trägt auf ihrer der Verteilerplatte 12 zugewandten Seite eine auf eine Stahlplatte 44 aufvulkanisierte Gummischeibe 46, die im Bereich des Verbindungsstutzens 28 eine von einem Stutzenteil durchgriffene Durchtrittsöffnung 48 aufweist. Die Gummiplatte 46 liegt mit ihrer freien Breitseitenfläche gegen eine an der inneren Breitseitenfläche der Verteilerplatte 12 befestigte Gegenscheibe 50 aus Hartmetall an, die im Bereich der Förderleitungsanschlüsse 30 mit Durchtrittsöffnungen 52 versehen ist. Im Bereich außerhalb des Verbindungsstutzens 28 werden die Durchtrittsöffnungen 52 durch die gegen die Scheibe 50 angepreßte Gummiplatte 46 verschlossen, so daß der in den Förderleitungen 20 befindliche Beton nicht aus der Förderleitung in den Zwischenbereich zwischen den beiden Platten 12 und 14 austreten kann. Der von der Zuleitung 24 ankommende Beton wird in Richtung der Pfeile 54 in die augenblicklich mit dem Verbindungsstutzen 28 fluchtende Förderleitung 20 gefördert.

Der Kugeldrehkranz 43 ist über einen Dichring 56 von dem die Förderleitungsanschlüsse 30 tragenden Bereich getrennt. Außerdem befindet sich zwischen dem Dichtring 56 und dem gemeinsamen Umfang der Gummischeibe 46 und der Hartmetallscheibe 50 ein umlaufender Ringraum 58, der über eine Leitung 60 von der Seite der Verteilerplatte her in Richtung des Pfeils 62 mit Spülwasser beaufschlagbar ist. Das Spülwasser strömt durch den Ringkanal 58 unter Mitnahme der dorthin austretenden Betonbestandteil und Feststoffteilchen nach unten und tritt durch eine nicht dargestellte Austrittsöffnung in einen Abwasserkanal aus. Weiter befindet sich im zentralen Bereich eine die Hartmetallscheibe 50 und die Gummischeibe 46 durchdringende Kammer 64, die über die Leitung 66 in Richtung des Pfeils 68 mit Spülwasser beaufschlagbar ist. Das die Kammer 64 reinigende Spülwasser wird über den Stutzen 70 in den Abwasserkanal geleitet.

## Patentansprüche

1. Vorrichtung zum Verteilen von mittels einer Pumpe durch eine Zuleitung gedrückten Dickstoffen, z.B. Beton in mehrere Förderleitungen (30), wobei die der Pumpe zugewandten Anschlüsse (30) der Förderleitungen (20) rotationssymmetrisch an einer Verteilerplatte (12) angeflanscht sind und ein schwenkbares, vorzugsweise S-förmiges Verteilerrohr (18) vorgesehen ist, dessen der Pumpe zugewandter Anschluß (21) über eine Drehkupplung (22) mit einem zur Pumpe führenden Zuleitungsstutzen (24) verbunden ist, und dessen zweiter Anschluß (26) mit einem an einer Drehplatte (16) angeordneten, durch die Drehplatte (16) hindurch zur Verteilerplatte (12) führenden Verbindungsstutzen (28) verbunden ist, wobei die Drehplatte (16) um die Achse (14) des Zuleitungsstutzens (24) relativ zur feststehenden Verteilerplatte (12) verdrehbar und der Verbindungsstutzen (28) dabei wahlweise an die verschiedenen Förderleitungsanschlüsse (30) an der Verteilerplatte (12) anschließbar ist, **dadurch gekennzeichnet**, daß an der Drehplatte (16) im Winkelabstand der Förderleitungsanschlüsse (30) voneinander Sperrnocken (32) und an der Verteilerplatte (12) eine Sperrklinke so angeordnet sind, daß die Drehplatte (16) mit ihren Sperrnocken (32) in Vorwärtsdrehrichtung unter der Sperrklinke (36) hindurchdrehbar und anschließend unter fluchtender Ausrichtung des Verbindungsstutzens (28) mit dem anzusteuernden Förderleitungsanschluß (30) bis zu einem Anschlag des Sperrnockens gegen die Sperrklinke rückwärts drehbar ist.

2. Vorrichtung nach Anspruch 1, **dadurch gekennzeichnet**, daß die am Umfang der Drehplatte (16) angeordneten Sperrnocken (32) eine als Auflauffläche für die Sperrklinke (36) ausgebildete vordere Keilfläche und eine gegen eine Stirnfläche (42) der Sperrklinke (36) anschlagende Rückflanke (40) aufweisen.

3. Vorrichtung nach Anspruch 1 oder 2, **dadurch gekennzeichnet**, daß die Drehplatte (16) auf ihrer der Verteilerplatte (12) zugewandten Breitseite eine mit einer Durchtrittsöffnung (48) für den Verbindungsstutzen (28) versehene gummielastische Dichtungsscheibe (46) trägt, mit der sie unter Abdichtung der zeitweilig nicht mit dem Verbindungsstutzen (28) fluchtenden Förderleitungsanschlüsse (30) gegen die Verteilerplatte (12) anliegt.

4. Vorrichtung nach Anspruch 3, **dadurch gekennzeichnet**, daß die Dichtungsscheibe (46) auf eine mit der Drehplatte (16) verbindbare Stahlplatte (44) aufvulkanisiert ist.

5. Vorrichtung nach Anspruch 3 oder 4, **dadurch gekennzeichnet**, daß die Verteilerplatte (12) auf ihrer der Drehplatte (16) zugewandten Breitseite eine mit Durchtrittsöffnungen (52) für die Förderleitungsanschlüsse (30) versehene, der Dichtungsscheibe (46) als Widerlager dienende, austauschbare Hartmetallscheibe (50) trägt.

6. Vorrichtung nach einem der Ansprüche 1 bis 5, bei welcher die Drehplatte (16) über einen Kugeldrehkranz (43) im Umfangsbereich an der Verteilerplatte (12) drehbar gelagert ist, **dadurch gekennzeichnet**, daß im Bereich der Anlageflächen von Drehplatte (16) und Verteilerplatte (12) zwischen dem Kugeldrehkranz (43) und den Förderleitungsanschlüssen (30) ein mit Spülwasser beaufschlagbarer umlaufender Ringkanal (58) angeordnet ist.

7. Vorrichtung nach Anspruch 6, **dadurch gekennzeichnet**, daß die Verteilerplatte (12) je eine zum Ringkanal führende obere, an eine Spülwasserleitung (60) anschließbare Bohrung und eine untere an die Abwasserleitung anschließbare Bohrung aufweist.

8. Vorrichtung nach Anspruch 6 oder 7, **dadurch gekennzeichnet**, daß der Ringkanal (58) im gemeinsamen Umfangsbereich der gummielastischen Dichtungsscheibe (46) und der Hartmetallscheibe (50) angeordnet ist.

9. Vorrichtung nach einem der Ansprüche 6 bis 8, **dadurch gekennzeichnet**, daß zwischen dem Ringkanal (58) und dem Kugeldrehkranz (43) ein umlaufender Dichtungsring (56) angeordnet ist.

10. Vorrichtung nach einem der Ansprüche 1 bis 9, **dadurch gekennzeichnet**, daß im zentralen Bereich der Drehplatte (16) und der Verteilerplatte (12) eine die Anlagefläche zwischen diesen Platten durchgreifende, mit Spülwasser beaufschlagbare Kammer (64) ausgespart ist.

11. Vorrichtung nach Anspruch 10, **dadurch gekennzeichnet**, daß die von der Seite der Verteilerplatte (12) mit Spülwasser beaufschlagbare Kammer (64) durch eine zentrale Aussparung in der Dichtungsscheibe (46) und der Hartmetallscheibe (50) gebildet ist.

12. Vorrichtung nach einem der Ansprüche 1 bis 11, **dadurch gekennzeichnet**, daß an der Verteilerplatte (12) ein auf im Winkelabstand der Förderleitungsanschlüsse (30) voneinander an der Drehplatte (16) angeordnete Vorsprünge berührungslos ansprechender Sensor angeordnet ist.

13. Vorrichtung nach Anspruch 12, **dadurch gekennzeichnet**, daß der Sensor aus zwei gleichartigen, in ODER-Schaltung miteinander gekoppelten Sensorelementen besteht.

14. Vorrichtung nach Anspruch 12 oder 13, **dadurch gekennzeichnet**, daß im Winkelabstand vom Sensor ein nur auf einen der Vorsprünge ansprechender Referenzsensor angeordnet ist.

15. Vorrichtung nach einem der Ansprüche 1 bis 14, **dadurch gekennzeichnet**, daß die Dickstoffpumpe während des Drehvorgangs der Drehplatte (16) abschaltbar ist.

16. Verfahren zum Betrieb der Vorrichtung nach einem der Ansprüche 1 bis 15, **dadurch gekennzeichnet**, daß der Drehvorgang der Drehplatte (16) nach Maßgabe des am Ausgang der augenblicklich durchgeschalteten Förderleitung (20) gemessenen Dickstoffdrucks ausgelöst wird.

17. Verfahren zu Betrieb der Vorrichtung nach einem der Ansprüche 1 bis 15, **dadurch gekennzeichnet**, daß der Drehvorgang der Drehplatte (16) nach Erreichen einer bestimmten, durch die augenblicklich durchgeschaltete Förderleitung (20) transportierten Fördermenge ausgelöst wird.

18. Verfahren zum Betrieb der Vorrichtung nach einem der Ansprüche 1 bis 15, bei welchem die Vorrichtung als Betonverteiler ausgebildet und mit einer Tunnelvortriebsmaschine verbunden ist, **dadurch gekennzeichnet**, daß die Umschaltfrequenz zwischen den einzelnen Drehvorgängen nach Maßgabe der Vortriebsgeschwindigkeit der Tunnelmaschine gesteuert wird.

19. Verfahren zum Betrieb der Vorrichtung nach einem der Ansprüche 1 bis 15, bei welchem die Vorrichtung als Betonverteiler ausgebildet und mit einer Tunnelvortriebsmaschine verbunden ist, wobei die Tunnelvortriebsmaschine gegenüber dem Gebirge durch eine unter der Einwirkung des Gebirgsdrucks stehende Fettkammer abgedichtet ist, **dadurch gekennzeichnet**, daß der Drehvorgang der Drehplatte bei Unterschreiten eines vorgegebenen Werts des Differenzdrucks zwischen dem Fettkammerdruck und dem Injektionsdruck an der Austrittsstelle der augenblicklich durchgeschalteten Förderleitung ausgelöst wird.

20. Verfahren nach einem der Ansprüche 16 bis 18, **dadurch gekennzeichnet**, daß vor dem Auslösen eines Drehvorgangs der Pumpvorgang unterbrochen wird.

21. Verfahren zum Betrieb der Vorrichtung nach einem der Ansprüche 1 bis 15, **dadurch gekennzeichnet**, daß bei jedem Drehvorgang der anzusteuernde Förderleitungsanschluß (20) durch den Verbindungsstutzen (28) in Vorwärtsdrehrichtung (38) ein Stück weit überfahren wird und im Anschluß daran in Rückwärtsdrehrichtung ein die miteinander fluchtende Lage von Förderleitungsanschluß (30) und Verbindungsstutzen (28) definierender Anschlag (42) mit erhöhtem Drehmoment angefahren wird.

22. Verfahren nach einem der Ansprüche 16 bis 20, **dadurch gekennzeichnet**, daß die verschiedenen Förderleitungsanschlüsse (30) in frei programmierbarer Reihenfolge angefahren werden.

## Claims

1. Device for distributing viscous materials, for example concrete, which is forced by a pump through a supply pipe, into a plurality of feed pipes (30̸), in which respect the connections (30̸) of the feed pipes (20̸), which are facing towards the pump, are rotation-symmetrically flanged to a distribution plate (12), and a pivotable, preferably S-shaped distribution pipe (18) is provided, its connection (21), which faces towards the pump, being connected via a rotary coupling (22) to a supply socket (24) connecting to the pump, and the second connection (26) of which is connected to a connecting socket (28), which is arranged at a rotary plate (16) and which connects through the rotary plate (16) to the distribution plate (12), and that the rotary plate (16) is rotatable around the axis (14) of the supply socket (24) relative to the fixed distribution plate (12), and that the connecting socket (28) is then selectively connectible to the various feed-pipe connections (30̸) at the distribution plate (12), **characterised in that** stop cams (32) are arranged on the rotary plate (16) at an angular distance relative to the feed-pipe connections (30̸), and a detent pawl is arranged at the distribution plate (12), so that the rotary plate (16) with its stop cams (32) can be turned through underneath the detent pawl (36) in its forward direction of rotation and is subsequently, with flush alignment of the connecting socket (28) to the feed-pipe connection (30̸) to be controlled, rotatable backwards up to a stop of the stop cam against the detent pawl.

2. Device according to claim 1, **characterised in that** the stop cams (32), which are arranged at the periphery of the rotary plate (16), have a forward edge surface which is arranged to serve as a run-up surface for the detent pawl (36), and a rear flank (42) which abuts against a front surface (42) of the detent pawl (36).

3. Device according to claim 1 or 2, **characterised in that** the rotary plate (16) carries at its broadside facing towards the distribution plate (12) a rubber-elastic sealing disc (46) comprising a passage (48) for a connecting socket (28), by means of which it abuts against the distribution plate (12) whilst sealing those feed-pipe connections which are temporarily not flush with the connecting socket (28).

4. Device according to claim 3, **characterised in that** the sealing disc (46) is vulcanized onto a steel plate (44) which is connected to the rotary plate (16).

5. Device according to claim 3 or 4, **characterised in that** the distribution plate (12) has, on its broadside facing towards its rotary plate (16), an exchangeable hard-metal plate (50̸), which is provided with passages (52) for feed-pipe connections (30̸) and which serves as abutment to the sealing disc (46).

6. Device according to one of claims 1 to 5, in which the rotary plate (16) is rotatably mounted in the peripheral area of the distributor plate 12 via a radial ballbearing, **characterised in that,** in the area of the abutment surfaces of rotary plate (16) and distributor plate (12), an annular channel (58), which is loaded with circulating water, is arranged between the radial ballbearing (43) and the feed-pipe connections (30̸).

7. Device according to claim 6, **characterised in that** the distribution plate (12) comprises a respective upper bore, which connects to the annular channel and which is connectible to a circulating-water pipe (60̸), and a lower bore which is connectible to the waste-water pipe.

8. Device according to claim 6 or 7, **characterised in that** the annular channel (58) is arranged in the common peripheral area of the rubber-elastic sealing disc (46) and the hard-metal disc (50̸).

9. Device according to one of claims 6 to 8, **characterised in that** a peripheral sealing ring (56) is placed between the annular channel (58) and the radial ballbearing (43).

10. Device according to one of claims 1 to 9, **characterised in that,** in the central area of the rotary plate (16) and the distribution plate (12), is recessed a chamber (64), which passes through the abutment surfaces between these plates and which is loaded with circulating water.

11. Device according to claim 10̸, **characterised in that** a chamber (64), which is loaded with circulating water from the side of the distributor plate (12), is formed by a central recess in the sealing disc (46) and the hard-metal disc (50̸).

12. Device according to one of claims 1 to 11, **characterised in that** a sensor, which responds contact-free to projections arranged on the rotary plate (16) at an angular distance from the feed-pipe connections (30̸), is arranged on the distributor plate 12.

13. Device according to claim 12, **characterised in that** the sensor is composed of two identical sensor elements which are connected in an OR-circuit.

14. Device according to claim 12 or 13, **characterised in that** a reference sensor, which only responds to one of the projections, is arranged at an angular distance to the sensor.

15. Device according to one of claims 1 to 14, **characterised in that** the viscous-matter pump can be switched off during rotation of the rotary plate (16).

16. Process for operation of the device according to one of claims 1 to 15, **characterised in that** the rotation of the rotary plate (16) is triggered according to a viscous-matter pressure measured at the output of a presently connected feed pipe (20̸).

17. Process for operation of the device according to one of claims 1 to 15, **characterised in that** the rotation of the rotary plate (16) is triggered on arriving at a specified feed quantity being transported via a presently connected feed pipe (20̸).

18. Process for operation of the device according to one of claims 1 to 15, in which the device is arranged as a concrete distributor and connected to a tunnelling machine, **characterised in that** the switch-over frequency between the individual rotary processes is controlled according to the forward-drive speed of the tunnelling machine.

19. Process for operation of the device according to one of claims 1 to 15, in which the device is arranged as a concrete distributor and connected to a tunnelling machine, and in which the tunnelling machine is sealed against the masses by a grease chamber under the influence of pressure of these masses, **characterised in that** that the rotation of the rotary plate is triggered when dropping below a specified value of differential pressure between grease-chamber pressure and injection pressure at the outlet of a presently connected feed pipe.

20. Process according to one of claims 16 to 18, **characterised in that** the pumping process is interrupted prior to triggering a rotation.

21. Process for operation of the device according to one of claims 1 to 15, **characterised in that** with each rotational process an approached feed-line connection (20̸) is to some extent overridden in the forward direction of rotation (38) by the connecting socket (28), and subsequently a stop (42) is approached in reverse rotational direction at increased torque, which stop defines the flush position of feed-line connection (30̸) and connecting socket (26).

22. Process according to one of claims 16 to 20̸, **characterised in that** the different feed-pipe connections (30̸) are approached in freely programmable succession.

## Revendications

1. Dispositif de distribution de liquides épais injectés au moyen d'une pompe dans une conduite d'alimentation, par exemple de béton, dans une pluralité de conduites de refoulement (30), les raccords (30) des conduites de refoulement (20) dirigés vers la pompe étant bridés à symétrie de révolution sur une plaque de distribution (12), et le dispositif comprenant un tube de distribution (18) pivotante, de préférence en forme de S, dont le raccord (21) dirigé vers la pompe est relié par l'intermédiaire d'un joint tournant (22) à une tubulure d'alimentation (24) menant vers la pompe, alors que son second raccord (26) est relié à une tubulure de raccordement (28) montée sur la plaque tournante (16), qui traverse ladite plaque tournante (16) et mène à la plaque de distribution (12), la plaque tournante (16) pouvant être tournée autour de l'axe (14) de la tubulure d'alimentation (24) par rapport à la plaque de distribution (12) fixe, et la tubulure de raccordement (28) pouvant alors être raccordée, au choix, aux différents raccords (30) des conduites de refoulement sur la plaque de distribution (12), **caractérisé en ce** que sur la plaque tournante (16) sont prévues des cames d'arrêt (32) disposées les unes par rapport aux autres à la distance angulaire des raccords (30) des conduites de refoulement et que la plaque de distribution (12) est munie d'un cliquet d'arrêt, de telle façon que, dans la direction de rotation vers l'avant, la plaque tournante (16) avec ses cames d'arrêt (32) peut passer sous le cliquet d'arrêt (36) et qu'elle peut ensuite être tournée en arrière, avec alignement de la tubulure de raccordement (28) avec le raccord (30) de la conduite de refoulement à raccorder, jusqu'à ce que l'une des cames d'arrêt vienne en butée contre le cliquet d'arrêt.

2. Dispositif selon la revendication 1, caractérisé en ce que les cames d'arrêt (32) disposées sur la circonférence de la plaque tournante (16) présentent une surface de coin avant conformée en surface d'arrêt pour le cliquet d'arrêt (36) et un flanc arrière (40) qui vient en butée contre une surface frontale (42) du cliquet d'arrêt (36).

3. Dispositif selon l'une des revendications 1 ou 2, caractérisé en ce que sur son côté large dirigé vers la plaque de distribution (12), la plaque tournante (16) porte un disque d'étanchéité (46) caoutchouteux muni d'une ouverture de passage (48) pour la tubulure de raccordement (28) avec lequel elle est appliquée contre la plaque de distribution (12) de manière à assurer l'étanchéité des raccords (30) des conduites de refoulement qui, momentanément, ne sont pas alignés avec la tubulure de raccordement (28).

4. Dispositif selon la revendication 3, caractérisé en ce que le disque d'étanchéité (46) est vulcanisé sur une plaque d'acier (44) pouvant être solidarisée avec la plaque tournante (16).

5. Dispositif selon l'une des revendications 3 ou 4, caractérisé en ce que la plaque de distribution (12) porte sur son côté large dirigé vers la plaque tournante (16), une plaque de métal dur (50) interchangeable, munie d'ouvertures de passage (52) pour les raccords (30) des conduites de refoulement et servant de butée pour le disque d'étanchéité (46).

6. Dispositif selon l'une des revendications 1 à 5, dans lequel la plaque tournante (16) est montée de manière tournante dans la région circonférentielle sur la plaque de distribution (12) par l'intermédiaire d'une couronne d'orientation à billes (43), caractérisé en ce que dans la région des surfaces de contact de la plaque tournante (16) et de la plaque de distribution (12), entre la couronne d'orientation à billes (43) et les raccords (30) des conduites de refoulement, est disposé un canal annulaire continu (58) pouvant être alimenté en eau de rinçage.

7. Dispositif selon la revendication 6, caractérisé en ce que la plaque de distribution (12) présente respectivement un alésage supérieur menant au canal annulaire et pouvant être raccordé à une conduite d'eau de rinçage (60), et un alésage inférieur pouvant être raccordé à une conduite des eaux usées.

8. Dispositif selon l'une des revendications 6 ou 7, caractérisé en ce que le canal annulaire (58) est disposé dans la région circonférentielle commune du disque d'étanchéité (46) caoutchouteux et de la plaque en métal dur (50).

9. Dispositif selon l'une des revendications 6 à 8, caractérisé en ce qu'un anneau d'étanchéité continu (56) est disposé entre le canal annulaire (58) et la couronne d'orientation à billes (43).

10. Dispositif selon l'une des revendications 1 à 9, caractérisé en ce que dans la région centrale de la plaque tournante (16) et de la plaque de distribution (12) est évidée une chambre (64) qui traverse la surface de contact entre lesdites plaques et peut être alimentée en eau de rinçage.

11. Dispositif selon la revendication 10, caractérisé en ce que la chambre (64) pouvant être alimentée en eau de rinçage par le côté de la plaque de distribution (12), est formée par un évidement central dans le disque d'étanchéité (46) et dans la plaque en métal dur (50).

12. Dispositif selon l'une des revendications 1 à 11, caractérisé en ce que sur la plaque de distribution (12) est monté un détecteur répondant sans contact à des saillies prévues sur la plaque tournante (16) et disposées les unes par rapport aux autres à la distance angulaire des raccords (30) des conduites de refoulement.

13. Dispositif selon la revendication 12, caractérisé en ce que le détecteur se compose de deux éléments de détecteur identiques couplés en circuit OU.

14. Dispositif selon l'une des revendications 12 ou 13, caractérisé en ce qu'à distance angulaire du détecteur est disposé un détecteur de référence qui répond uniquement à l'une des saillies.

15. Dispositif selon l'une des revendications 1 à 14, caractérisé en ce que la pompe à liquides épais peut être arrêtée pendant la rotation de la plaque tournante (16).

16. Procédé pour la mise en oeuvre du dispositif selon l'une des revendications 1 à 15, **caractérisé en ce** que la rotation de la plaque tournante (16) est déclenchée en fonction de la pression des matières épaisses mesurée à la sortie de la conduite de refoulement (20) momentanément raccordée.

17. Procédé pour la mise en oeuvre du dispositif selon l'une des revendications 1 à 15, caractérisé en ce que la rotation de la plaque tournante (16) est déclenchée après l'atteinte d'une quantité déterminée transportée dans la conduite de refoulement (20) momentanément raccordée.

18. Procédé pour la mise en oeuvre du dispositif selon l'une des revendications 1 à 15, dans lequel le dispositif est conformé en distributeur de béton et raccordé à une machine à creuser des tunnels, caractérisé en ce que la fréquence de commutation entre les différentes rotation est commandée en fonction de la vitesse de creusement de la machine à creuser des tunnels.

19. Procédé pour la mise en oeuvre du dispositif selon l'une des revendications 1 à 15, dans lequel le dispositif est conformé en distributeur de béton et raccordé à une machine à creuser des tunnels, l'étanchéité entre la machine à creuser des tunnels et les roches étant assurée par une chambre à graisse soumise à la poussée du terrain, caractérisé en ce que la rotation de la plaque tournante est déclenchée dès que la pression différentielle entre la pression dans la chambre à graisse et la pression d'injection à la sortie de la conduite de refoulement momentanément raccordée descend en dessous d'une valeur prédéterminée.

20. Procédé selon l'une des revendications 16 à 18, caractérisé en ce que le pompage est interrompu avant le déclenchement d'une rotation.

21. Procédé pour la mise en oeuvre du dispositif selon l'une des revendications 1 à 15, caractérisé en ce qu'à chaque rotation, le raccord de la conduite de refoulement (20) à raccorder est dépassé d'une certaine quantité par la tubulure de raccordement (28) dans le sens de rotation vers l'avant (38), et qu'ensuite le contact avec une butée (42) qui définit l'alignement du raccord (30) de la conduite de refoulement avec la tubulure de raccordement (28), se fait avec un couple de rotation accru.

22. Procédé selon l'une des revendications 16 à 20, caractérisé en ce que les différents raccords (30) des conduites de refoulement sont positionnés dans un ordre librement programmable.
